# EUROPEAN PATENT APPLICATION

(11) **EP 3 355 550 A1**
(43) Date of publication of application: **01.08.2018**
(21) Application number: 16848136.4
(22) Date of filing: 22.09.2016
(51) Int. Cl.: H04L 29/08

(54) **TWO-DIMENSIONAL CODE BASED DEVICE APPLICATION METHOD AND WASHING MACHINE**

(30) Priority: 22.09.2015 CN 201510606957
(71) Applicant: Qingdao Haier Drum Washing Machine Co., Ltd., Qingdao, Shandong 266101 (CN)
(72) Inventor: SHI, Feng, Qingdao Shandong 266101 (CN); HUANG, Zhenxing, Qingdao Shandong 266101 (CN); SONG, Jun, Qingdao Shandong 266101 (CN); ZHANG, Chunfeng, Qingdao Shandong 266101 (CN); ZHANG, Tao, Qingdao Shandong 266101 (CN); SUN, Yunpeng, Qingdao Shandong 266101 (CN); WANG, Wenjian, Qingdao Shandong 266101 (CN)
(74) Representative: Gill Jennings & Every LLP
(86) International application number: PCT/CN2016/099738
(87) International publication number: WO 2017/050255

(57) **Abstract**

The present invention provides a method for using a device based on a two-dimensional code and a washing machine. In the method for using a device based on a two-dimensional code, each device is bound to one two-dimensional code. The two-dimensional code includes at least a download address field, an operation interface address field and a device unique code field. Two-dimensional codes of devices are different from each other.

## Description

### TECHNICAL FIELD

The present application relates to the field of washing device and control method thereof. For example, the present application relates to a method for using a device based on a two-dimensional code and a washing machine using the method.

### BACKGROUND

An interactive system for washing machine information in the related art includes: an interactive platform for providing an interactive information interface between a user and a washing machine manufacturer, a two-dimensional code label disposed on a washing machine accessory, a mobile terminal for scanning the two-dimensional code label to acquire address information and acquiring interactive information via the interactive platform based on the address information, and a server for receiving the interactive information inputted by the washing machine manufacturer and providing the interactive information to the user via the interactive platform. The two-dimensional code label has address information of the interactive platform. The server is associated with the interactive platform. The system can achieve information interaction between the user and the washing machine manufacturer.

The system and the interaction method have the disadvantages as follows. First, the interactive content includes only information of fault code of washing machine, sales discount of washing machine, user manual of washing machine, demand of tracked fixed customers, and questionnaire about demand of customers for washing machine. This just facilitates communication between the user and the washing machine manufacturer and improves interestingness and interactivity, but fails to facilitate use (e.g., payment and reservation by use of the mobile terminal) of the washing machine. Secondly, the two-dimensional code is not unique. That is, two-dimensional codes of the same batch of washing machines may be the same. Thus a specific washing machine cannot be identified according to a two-dimensional code.

### SUMMARY

One object of the present application is to provide a method for using a device based on a two-dimensional code in one-to-one correspondence with the device.

Another object of the present application is to provide a washing machine using the above method.

To achieve this object, in one aspect, the present application adopts the solutions described below.

A method for using a device based on a two-dimensional code is provided. In the method, the device is bound to one two-dimensional code, the two-dimensional code includes at least a download address field, an operation interface address field and a device unique code field; and two-dimensional codes of different devices are different from each other.

Optionally, the device unique code field includes a device type code, a date, and a local serial number.

Optionally, the date is a date when the bound device is produced, a date when the bound device is put into use or a date when the two-dimensional code is generated.

Optionally, the control method includes: it is determined whether an application for a target device is installed on a mobile terminal, and when the application for the target device is installed on the mobile terminal, the application scans the two-dimensional code and then performs selection operation, reservation operation and/or payment operation; or when the application for the target device is not installed on the mobile terminal, the mobile terminal scans the two-dimensional code of the target device, the mobile terminal downloads and installs the application according to the two-dimensional code, and the application scans the two-dimensional code and then performs selection operation, reservation operation and/or payment operation.

Optionally, the method includes: a mobile terminal scans a two-dimensional code of a target device; the mobile terminal is linked to a server according to the two-dimensional code; and the mobile terminal performs selection operation, reservation operation and/or payment operation on the server.

Optionally, the server is a cloud server.

Optionally, the device is a washing machine.

In another aspect, the present application adopts the solutions described below.

A washing machine using the above method is provided. The washing machine includes a housing and a control device, where the housing is provided with a two-dimensional code.

Optionally, the control device is communicatively connected to a cloud server.

In the method for using a device based on a two-dimensional code in embodiments of the present application, the two-dimensional code bound to each device is unique. The two-dimensional code including a download address field, an operation interface address field, and a device unique code field can differentiate each device from other similar devices and thus is user-friendly. When standing in front of a public device, a user can scan the two-dimensional code on the device to operate the public device simply by using a mobile terminal, which simplifies a complex process including using the mobile terminal to log in to a server, select the device according to a position and a serial number, and then perform operations (e.g., payment), thereby providing good user experience.

The housing of the washing machine according to the present application is provided with a two-dimensional code, allows operations like selection, reservation and/or payment using the above method, and thus is user-friendly.

### BRIEF DESCRIPTION OF DRAWINGS

One or more embodiments are exemplarily illustrated by way of corresponding accompanying drawings. Such exemplary illustration does not limit the embodiments. Components having the same reference numerals in the drawings are similar components. Unless specifically stated, the accompanying drawings are not scale-limiting.

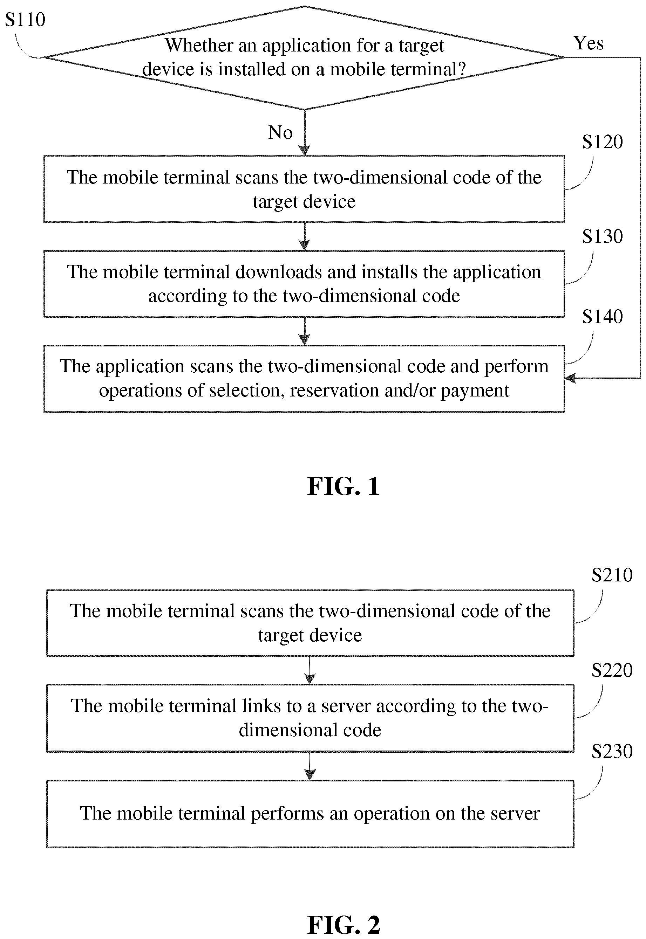

FIG. 1 is a flowchart of a control method according to embodiment 1 of the present application.
FIG. 2 is a flowchart of a control method according to embodiment 2 of the present application.

### DETAILED DESCRIPTION

Solutions of the present application are further described below through specific embodiments in connection with the accompanying drawings. If not in collision, features in the embodiments may be combined with each other.

### Embodiment 1

This embodiment discloses a method for using a device based on a two-dimensional code. The device may be, but is not limited to, a household appliance, and is applicable to an electronic device that is installed in public places for paid use. In this embodiment, a washing machine is taken as an example. The washing machine using the above method includes a housing and a control device, where the housing is provided with a two-dimensional code. Each washing machine has a different two-dimensional code. Each two-dimensional code is unique. Each washing machine is bound to one such unique two-dimensional code. The two-dimensional code includes at least a download address field, an operation interface address field and a device unique code field. The device unique code field includes a washing machine type code, a date, and a local serial number.

The date in the device unique code field is not limited, and may be the date when the bound washing machine is produced, the date when the bound washing machine is put into use or the date when the two-dimensional code is generated. The date in the device unique code field may also be another date that can be programmed into the device unique code field and can be used to distinguish the two-dimensional code from other two-dimensional codes.

When a user selects a certain washing machine as a target washing machine and prepares to use an application (App) for operation, the control method includes the steps described below.

In step S110, it is determined whether the application of the target washing machine is installed on a mobile terminal used by the user; if the application is installed on the target device, the method goes to step S140. If the application is not installed on the target device, the method goes to step S120.

In step S120, the mobile terminal scans the two-dimensional code of the target washing machine, enters the download interface and prepares to download the application.

In step S130, the mobile terminal downloads and installs the application according to the two-dimensional code. In some embodiments, cellphones of different versions (IOS or Android) have different download and installation methods.

In step S140, after the application is installed, the application is used to scan the two-dimensional code and perform operations of selection, reservation and/or payment.

The method for using a device based on a two-dimensional code according to this embodiment of the present application can differentiate each device from other devices, which is user-friendly and thus provides good user experience. The operations of selection, reservation and/or payment are performed on the washing mashing of the present application using the above method. Thus, the washing machine according to the present application is user-friendly.

### Embodiment 2

This embodiment discloses a method for using a device based on a two-dimensional code. In this embodiment, the device is still a washing machine and the washing machine using this method is substantially the same as that in embodiment 1. Each washing machine has a different two-dimensional code. Each two-dimensional code is unique. Each washing machine is bound to one such unique two-dimensional code. The two-dimensional code includes at least a download address field, an operation interface address field and a device unique code field.

When a user selects a certain washing machine as a target washing machine, but it is inconvenient for the user to use an application to operate the washing machine or the user is unprepared to use the application to operate the washing machine (e.g., no Wi-Fi is available or the user does not want to waste time and traffic in installing the application because the user will not use the washing machine again), the control method includes the steps described below.

In step S210, a mobile terminal scans the two-dimensional code of the target washing machine and skips application download.

In step S220, the mobile terminal links to a server according to the two-dimensional code and directly locks the washing machine on a web page of the server.

In step S230, the mobile terminal performs selection operation, reservation operation and/or payment operation on the web page of the server.

The server may be, but is not limited to, a cloud server. When the server is a cloud server, a control device of the washing machine is communicatively connected to the cloud server.

The method for using a device based on a two-dimensional code according to this embodiment of the present application can differentiate each device from other devices, which is user-friendly and thus provides good user experience. The operations like selection, reservation and/or payment are performed on the washing machine according to the present application using the above method, and thus the washing machine according to the present application is user-friendly.

It is to be noted that the above are only exemplary embodiments of the present application and the technical principles used therein. It will be understood by those skilled in the art that the present application is not limited to the specific embodiments described herein. Those skilled in the art can make various modifications, readjustments and substitutions without departing from the scope of the present application.

### INDUSTRIAL APPLICABILITY

Embodiments of the present application provide a method for using a device based on a two-dimensional code and a washing machine. The washing machine using this method includes a control device and a housing, which is provided with a two-dimensional code. The method for using a device based on a two-dimensional code according to the present application can differentiate each device from other devices, which is user-friendly and thus provides good user experience. The operations like selection, reservation and/or payment are performed on the washing machine according to the present application using the above method, and thus the washing machine according to the present application is user-friendly.

## Claims

1. A method for using a device based on a two-dimensional code, wherein the device is bound to one two-dimensional code, the two-dimensional code comprises at least a download address field, an operation interface address field and a device unique code field; and two-dimensional code of different devices are different from each other.

2. The method of claim 1, wherein the device unique code field comprises a device type code, a date, and a local serial number.

3. The method of claim 2, wherein the date is a data when the bound device is produced, a date when the bound device is put into use or a date when the two-dimensional code is generated.

4. The method of any one of claims 1 to 3, wherein the method comprises:
determining whether an application for a target device is installed on a mobile terminal, and when the application for the target device is installed on the mobile terminal, using the application to scan the two-dimensional code and then perform at least one operation selected from a group consisting of selection, reservation and payment; or
when the application for the target device is not installed on the mobile terminal, using the mobile terminal to scan the two-dimensional code of the target device;
using the mobile terminal to download and install the application according to the two-dimensional code; and
using the application to scan the two-dimensional code and then perform at least one operation selected from the group consisting of selection, reservation and payment.

5. The method of any one of claims 1 to 3, wherein the method comprises:
using a mobile terminal to scan a two-dimensional code of a target device;
using the mobile terminal to link to a server according to the two-dimensional code; and
using the mobile terminal to perform on the server at least one operation selected from a group consisting of selection, reservation and payment.

6. The method of claim 5, wherein the server is a cloud server.

7. The method of any one of claims 1 to 3, wherein the device is a washing machine.

8. A washing machine using the method of any one of claims 1 to 6, comprising a housing and a control device, wherein the housing is provided with a two-dimensional code.

9. The washing machine of claim 8, wherein the control device is communicatively connected to a cloud server.
